# EUROPEAN PATENT SPECIFICATION

(11) **EP 2 108 426 B1**
(45) Date of publication and mention of the grant of the patent: **12.12.2012**
(21) Application number: 08153862.1
(22) Date of filing: 31.03.2008
(51) Int. Cl.: B01D 29/66, B01D 29/90, B01D 29/03

(54) **Fluid filtration device with self cleaning properties**
Fluidfiltriervorrichtung mit selbstreinigenden Eigenschaften
Dispositif de filtration de fluides doté de propriétés d'auto-nettoyage

(43) Date of publication of application: 14.10.2009
(73) Proprietor: Perkins Engines Company Limited, Eastfield Peterborough PE1 5NA (GB)
(72) Inventor: Wright, Philip Geoffrey, Eastfield Peterborough PE1 5NA (GB)
(74) Representative: Hatzmann, Martin

(56) References cited:
- CH-A- 416 562
- DE-B- 1 147 079
- DE-C- 235 699
- DE-C- 823 821
- FR-A- 806 635
- GB-A- 698 395
- GB-A- 2 130 111
- US-A- 3 045 827
- US-A- 4 946 598
- US-A- 5 132 013

## Description

### Technical Field

The present disclosure is directed to a lubrication system of an internal combustion engine, including a turbocharger having at least one bearing and including a fluid filtration device having self cleaning properties.

### Background

A fluid flow free of small solid particulates is essential to many applications. An example of such an application is provided by the lubrication of a turbocharger of internal combustion engines. The exhaust gas driven turbine of a turbocharger may spin at speeds as high as 150,000 rotations per minute. To facilitate such speeds, most turbochargers feature a fluid bearing to support the turbine shaft. A thin film of oil, which is continuously circulated along the shaft, cools the shaft and ensures that it can rotate without noticeable friction. Commonly, the oil that is circulated along the shaft is also circulated through the engine for similar lubrication and/or cooling purposes. There it may inadvertently collect miniscule debris particles, such as for example metal filings that were left behind inside the engine block when drilling the lubrication oil passageways. Since frictional contact between oil contaminated with metal filings or other debris particles and a rotating turbine shaft would certainly damage the latter, the lubrication oil feed system is generally fitted with a filtration device such as an oil filter. However, as the oil filter traps more and more material over time, it inevitably gets clogged, obstructing the oil flow. In practice, this means that such a filtration device has to be serviced regularly.

In order to prevent the rapid clogging of a gauze of a fluid filter, US 3,516,547 discloses a filtering apparatus wherein a pressure pulse generator, in particular a gear pump, is disposed downstream of the filter housing. The pulse generator creates pressure pulses that pass upstream in the liquid flow, to the filter housing and through the filter element. Any debris or foreign matter adhering to the outside (i.e. upstream side) of the gauze is dislodged by the pressure pulses to settle in a sump. Thus, clogging of the filter is retarded and the length of time between filter element changes is increased.

Unfortunately however, the use of a gear pump or any other special pressure pulse generator adds significantly to the design complexity, size and manufacturing costs of the system. Further, US 3,516,547 discloses no measures to prevent dislodged and/or settled matter from being stirred up by fluid passing through the filter. Therefore, the material freed from the gauze may be sucked in again, rendering the work of the pressure pulse generator in vain.

US 5,132,013 relates to a self-cleaning filter assembly to be utilized primarily irrigation or similar distribution systems. The known filter assembly 10 comprises a container 11 defining a filter space, a filter screen 18 dividing the filter space into a first and a second filter space part, an inlet pipe 36 connected to the filter housing and discharging into the first filter space part, an outlet pipe 46 connected to the filter housing and emanating from the second filter space part. An end portion of the inlet pipe protrudes from an upstream side of the filter housing into the first filter space part and is disposed upstream of the filter element. The filter screen has perforations 42 of a size determined by the size of the material that must be removed. The disclosed filter screen may be a frustum of a cone.

The present disclosure provides a lubrication system that provides improvements over prior lubrication systems.

### Summary of the Invention

As stated above, conventional oil filter traps in a lubrication system that includes a turbocharger have the disadvantage that, as the oil filter traps more and more material over time, it inevitably gets clogged, obstructing the oil flow. In practice, this means that such a filtration device has to be serviced regularly.

In order to overcome these disadvantages, the present disclosure provides a lubrication system according to claim 1. The disclosure also provides a method for filtering lubrication oil for a bearing of a turbocharger in accordance with claim 11 and the use of a filtration device in a lubrication system of an internal combustion engine in accordance with claim 12.

In the claimed lubrication system, method and use, the servicing of the filtration device is not necessary at all during the lifetime of the lubrication system or at least the servicing is minimal.

### Brief Description of the Drawings

Fig. 1 and Fig. 2 both show a cross-sectional diagrammatic illustration of an exemplary embodiment of a filtration device according to the present disclosure, and

Fig. 3 is a perspective view of a turbocharger unit connected to lubrication oil feed pipe that includes a fluid filtration device as shown in Fig. 1 or Fig. 2.

### Detailed Description

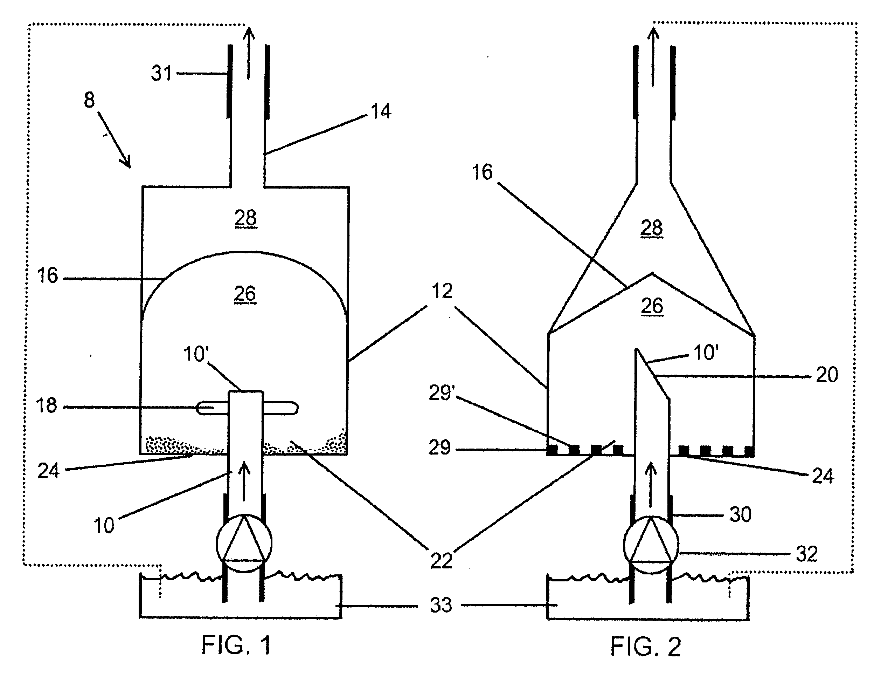

Fig. 1 and Fig. 2 diagrammatically show two similar yet different exemplary embodiments of a filtration device 8 that may be part of the lubrication system of an internal combustion engine that includes a turbocharger T having at least one bearing 48, a fluid discharge pipe 31 having an outlet that is in fluid connection with the at least one bearing 48 of the turbocharger T, and a the fluid feed pipe 30 having an inlet that is in fluid connection to the lubrication system of the engine for feeding lubrication oil to the at least one bearing 48 of the turbocharger (T). Parts common to both embodiments have been indicated with corresponding reference signs.

The filtration devices 8 may include a housing 12 that may define a filter space 26, 28. Although filter space 26, 28 may in principle have any geometrical contour, a fully (Fig.l) or at least partly (Fig. 2) cylindrical shape to promote the smooth flow of fluid may have preference.

A filter element 16 may divide filter space part 26, 28 into a first filter space part 26 and a second filter space part 28. Filter element 16 may abut the inner side of the housing 12, and may be a gauze filter made from any suitable material such as, for example, wire mesh or wire gauze. Further, filter element 16 may be at least partly convexly shaped, having its concave side directed towards first filter space 26. More specifically, it may have a substantially domed shape, as shown in Fig. 1, or a substantially conical shape as shown in Fig. 2.

An inlet pipe 10, discharging into first filter space part 26, may be connected to an upstream side 24 of filter housing 12. As seen in Fig. 1 and Fig. 2, an end portion of inlet pipe 10 may protrude from the upstream side 24, such that fluid supplied to the filtration device 8 may be discharged into the body of the first filter space part 26, and not immediately adjacent to upstream side 24. Consequently, a fluid flow sheltered debris collection area 22 may border upon or surround the protruding end portion of the inlet pipe 10. The protruding end portion of inlet pipe 10 may be slanted, as indicated with reference number 20 in Fig. 2. In embodiments featuring a convexly shaped filter element 16, the protruding end portion of inlet pipe 10 may be disposed opposite an apex of the filter element 16. The protruding end portion of inlet pipe 10 may be preferably disposed upstream of, i.e. underneath or at a lower position than, filter element 16 and may preferably not touch the filter element 16. An outlet pipe 14 emanating from the second filter space part 28 may be connected to another, possibly higher side of the filter housing 12 to discharge fluid from the filtration device 8.

In the illustrated embodiment of Fig. 1, the upstream side 24 is depicted as a horizontally oriented and generally flat surface. It is contemplated however, that the upstream side 24 may have some kind of non-flat profile, for example formed by inward protrusions 29, as shown in Fig. 2, and may wholly or partly be oriented at an angle with the horizontal. The upstream side 24 may also be fitted with one or more magnets 29', or may be magnetic/magnetized itself.

The filtration device 8 may include a baffle arrangement 18 to prevent fluid from flowing through the debris collection area 22 and/or upwardly along the protruding end portion of the inlet pipe 10. As seen in Fig. 1, the baffle arrangement may take the form of an annular disc 18 attached to the end portion of the inlet pipe 10, somewhat above the upstream side 24 of the housing 12.

The upstream side 24 may be the bottom side. In such a configuration, not only backflow of fluid but also gravity may help to settle the debris on and/or adjacent the upstream side 24. Additionally, in such a configuration, gravity may be the force that causes the backflow of fluid in the filtration device 8.

The fluid filtration device 8 may be embodied in a relatively small unit, the absolute preferential measurements of which will depend on the desired application. The ratio between a cross sectional area of a discharge opening in the end portion of the inlet pipe 10 and the area of the bottom side 24 surrounding the protruding end portion of the inlet pipe, i.e. the debris collection area 22, is preferably smaller than 1/4. Further, a length of the end portion of the inlet pipe 10 that protrudes from the bottom side 24 of the filter housing 12 may be at least D, wherein D is the diameter of the inlet pipe 10.

The housing 12 may be composed of a top and a bottom section, which could be crimped around the mid point of the housing 12 so as to join both sections and to retain the filter element 16.

The filtration device 8 is part of a lubrication oil system of an internal combustion engine having a turbocharger T. The fluid system may include a fluid feed pipe 30 connected to the inlet pipe 10 and a fluid discharge pipe 31 connected to the outlet pipe 14 of the filtration device. Of course, the fluid feed pipe 30 and the inlet pipe 10 may be one integral part. Similarly, the fluid discharge pipe 31 and the outlet pipe 14 of the filtration device 8 may be one integral part. The fluid system includes a pumping device 32 and may include a fluid storage chamber 33 that may be positioned at a level below the level of the filtration device 8. The fluid flowing through the fluid discharge pipe may, via various components be returned to the fluid storage chamber 33, so that a circulation of fluid may be provided.

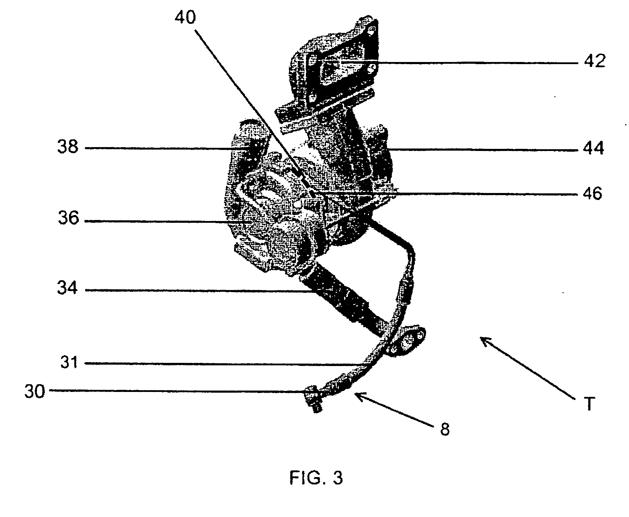

Fig. 3 shows a part of such a lubrication system. The turbocharger T may have at least one bearing 48. The fluid discharge pipe 31 may be connected to the outlet pipe 14 of the filtration device 8 and may have an outlet that is in fluid connection with the at least one bearing 48 of the turbocharger T. The fluid feed pipe 30 may be connected to the inlet pipe 10 of the filtration device 8 and may have an inlet that is in fluid connection to a pumping device 32 of the lubrication system of the engine for feeding lubrication oil to the at least one bearing 48 of the turbocharger T. An oil drain assembly 34 may be present to transport the lubrication oil to the fluid storage chamber 33 that may be formed by the sump of the internal combustion engine.

### Industrial Applicability

The fluid filtration device 8 may, instead of being used in a oil lubrication systems also be part of another type of fluid circulating system. Such a fluid circulation system may, for example, be a fuel supply system. To clarify the operation of the fluid filtration device 8, it will first be discussed without reference to any specific fluid circulating system in which it may be embedded. Subsequently, its use in a turbocharger lubrication system will be discussed briefly, so as to provide a specific and advantageous exemplary application.

Referring now to Fig. 1 and Fig. 2. In operation, the pumping device 32 of a fluid circulating system may apply a pressure difference across the fluid filtration device 8 to drive a fluid flow through it. Fluid that may be supplied via the fluid feed pipe 30 may enter the device through inlet pipe 10 and may leave it through outlet pipe 14 to be discharged via fluid discharge pipe 31. Chips or other particulate matter that may be present in the fluid flow may be retained by the filter element 16. When the filtration device 8 is used continuously and the fluid to be processed is indeed polluted, clogging of the filter element 16 may occur eventually. However, many filtration devices 8 may find use in machines such as engines that are operated and turned off periodically. The disclosed fluid filtration device 8 relies on this periodically returning period of non-activity, which is accompanied by a decay and/or loss of the aforementioned driving pressure. As the driving pressure ceases to drive fluid through the filtration device 8, debris particles captured by the filter element 16 are no longer forced against it. When the pumping device 32 is shut down a backflow of fluid may be present in the filtration device 8 that flows from the outlet pipe 14 to the inlet pipe 10, thereby backflushing the filter element 16 so that debris may be dislodged from the filter element 16 and may settle on the bottom side 24 of the filtration device 8. The fluid system may encompass a fluid volume downstream of the filtration device 8 that flows back through the filtration device 8 when the pumping device 32 is shut down that is so large that substantially all debris may be dislodged from the filter element 16. The fluid storage chamber 33 may be positioned at a level below the level of the filtration device 8. The configuration of the fluid feed pipe 30 and the fluid discharge pipe 31 may be so that the backflow of fluid in the filtration device 8 occurs due to gravity. The backflow of fluid through the filtration device 8 may dislodge any trapped material from (the upstream side of) the filter element 16, and may flush it back into the area of the first filter space part 26. There, under the action of gravity, the debris may settle at the upstream side 24 of the housing 12. For instructional purposes, some accumulated debris is shown in Fig. 1. Note that the shown debris has settled in a debris collection area 22 behind/below/upstream of the point where the inlet pipe 10 discharges into the first filter space part 26. This situation may occur automatically as the inlet pipe 10 protrudes from the upstream side 24, while practically all debris dislodged from the filter element 16 will settle at the lowest point within the housing 12.

Instead of gravity, the loss of driving pressure by shutting down the pumping device 32 may cause upstream fluid portions to flow back because of a pressure difference caused by other reasons, for example, expansion of compressed fluid downstream of the filtration device 8 or expansion of an expansion vessel in the fluid system downstream of the filtration device 8. Such pressure difference may temporarily reverse the flow of fluid through the filtration device 8.

As the machine into which the filtration device 8 may be incorporated resumes working after a period of inactivity, the pumping device 32 may be activated again and the driving pressure may be restored and the flow of fluid through the filtration device 8 may be reestablished. The exact pattern of the flow in the filtration device 8 may be complicated, and may depend on the exact contours of the filtration space 26, 28. It will therefore not be elaborated upon. However, the fact to be appreciated here is that the flow strength in the debris collection area 22 may be absent or at least rather weak. This is an advantageous result of the fact that the debris collection area 22 is located upstream of the point where the inlet pipe 10 discharges into the first filter space part 26. Accumulated debris will thus not or barely be stirred up by the flow of fluid through the filtration device 8, but remain settled in its place. There is no need to remove settled debris from debris collection area 22 as long as it is not effectively reintroduced into the fluid flow through its own motion. Effectively, this means that the filtration device 8 may need less servicing, if any at all.

Various measures may be taken to improve the performance of the fluid filtration device 8. Although a length of D (wherein D is the diameter of the inlet pipe 10), by which the inlet pipe 10 protrudes from the upstream side 24 may be sufficient, increasing the length by which the inlet pipe 10 may protrude from the upstream side 24, and/or increasing the size of the debris collection area 22 around the protruding inlet pipe 10 may lead to extension of the debris storage capacity of the filtration device 8. Thus, the chance that debris leaves the debris collection area 22 may be minimized. The slanted end 20 of the inlet pipe 10 shown in Fig. 2 may also help to direct any debris towards the upstream side 24 when the backflow of fluid is present.

Further, the baffle 18 that may be applied to the protruding part of the inlet pipe 10 may prevent the convection of fluid over/through the debris collection area 22 and upwardly along the protruding inlet pipe 10. Convection of this kind could pick up accumulated debris from the upstream side 24 and reintroduce it into the flow of fluid towards the filter element 16. In Fig. 1, baffle 18 is depicted as a small ring-shaped disc that is attached to the inlet pipe 10 just below or upstream of its exit opening 10'. Another way in which the pickup of accumulated debris may be prevented may be the profile of inward protrusions 29, such as ridges, to the upstream side 24 (see Fig. 2). The protrusions 29 may serve as fluid flow barriers in between, behind, or against which accumulated debris can settle in relative quiet. To retain any magnetic debris particulates, such as steel or iron filings from the engine block, upstream side 24 may be fitted with one or more magnets 29', or may be magnetized itself.

The filter element 16 may be convexly shaped when viewed from above to help direct the backflow of fluid such that dislodged debris particles are confined to the inner walls of the filter housing 12. Fig. 1 illustrates a dome shaped filter element 16, while Fig. 2 illustrates a conically shaped filter element 16; both may have substantially the same effect. In addition, the exit opening in the end portion of the inlet pipe 10 may be advantageously disposed opposite an apex of the filter element 16, the point from which the dislodged debris is diverted by the backflow. Alternatively, the filter element 16 may also have a concave shape when viewed from above. Debris that is taken along with the fluid flow may be urged to the peripheral side of such a filter element 16. When, subsequently, the backflow of fluid occurs, it may be less likely that the debris at the peripheral side of the filter element 16 re-enters the outlet opening of the inlet pipe 10.

The turbocharger T shown in Fig. 3 may appear on an internal combustion engine, for example a diesel engine, in which the fluid filtration device 8 may be implemented. Though the basic workings of a turbocharger T may be considered sufficiently known to a person skilled in the art, they will be addressed here briefly. In operation, turbocharger T may take in hot exhaust gas from an exhaust gas manifold of the engine through an exhaust gas intake 42. The exhaust gas may drive a turbine, and may subsequently be discharged from turbocharger T through an exhaust gas outlet 44. The turbine may be connected by a shaft (not visible) to a compressor, that may suck in air through an ambient air inlet 36, may compress it, and may output it through a compressed air outlet 38 to an intake manifold of the engine. As discussed before, the shaft of the turbocharger T connecting the turbine and the compressor may be supported by a bearing 48. To lubricate the bearing 48, the turbocharger T may be fitted with a lubrication oil feed pipe through which lubrication oil may be transported from the cylinder block of the engine to a lubrication oil feed point 40 of the turbocharger T. After lubricating the bearing 48, the oil may leave the turbocharger T through an oil drain tube assembly 34 that may lead the lubrication oil back into the cylinder block or sump of the engine. To minimize the chance that the oil that may be fed to the fluid bearing 48 of the turbocharger T contains particles, in particular particles that are entrained in the oil as it passes through the cylinder block, the disclosed fluid filtration device 8 may be incorporated into the lubrication oil circulation system of the engine. Particularly suitable locations may be the end of the lubrication oil passageways inside the cylinder block and, even better, the lubrication oil feed pipe of the turbocharger T. Preferably, the fluid filtration device 8 may be incorporated adjacent the lower end of the lubrication oil feed pipe, so as to maximize the backflow of oil that will pass through it once the pumping device 32 stops. In terms of the fluid system, an part of the lubrication oil feed pipe that is upstream of the filtration device 8 may be considered as the fluid feed pipe 30 and a part of the lubrication oil feed pipe 46 that is downstream of the filtration device 8 may be considered as the fluid discharge pipe 31. The sump of the internal combustion engine may be considered as the fluid storage chamber 33.

The filtration device, fluid system and the method disclosed may minimize the chance of fowling or damage of components downstream of the filtration device by particles. Due to the specific configuration, the servicing of the filtration device may be not necessary at all during the lifetime of the fluid system or at least servicing may be minimal.

It will be apparent to those having ordinary skill in the art that various modifications and variations can be made to the disclosed filtration device, the fluid system and the method. Other embodiments will be apparent to those having ordinary skill in the art from consideration of the specification. For example, the position of the pumping device in the fluid system may be upstream as shown, but also downstream. It is intended that the specification and examples be considered as exemplary only. Other aspects, features and advantages will be apparent upon examination of the attached drawings and appended claims

## Claims

1. A lubrication system of an internal combustion engine, including:
- a turbocharger (T) having at least one bearing (48);
- a fluid discharge pipe (31) having an outlet that is in fluid connection with the at least one bearing (48) of the turbocharger (T);
- a the fluid feed pipe (30) having an inlet that is in fluid connection to the lubrication system of the engine for feeding lubrication oil to the at least one bearing (48) of the turbocharger (T);
- a pumping device (32),
- a filtration device (8) that includes:
• a filter housing (12) defining a filter space (26,28);
• a filter element (16) dividing the filter space (26,28) into a first (26) and a second (28) filter space part;
• an inlet pipe (10) connected to the filter housing (12) and discharging into the first filter space part (26) and connected to the fluid feed pipe (30);
• an outlet pipe (14) connected to the filter housing (12) and emanating from the second filter space part (28) and connected to fluid discharge pipe (31),
**characterized in that**
the filtration device further includes:
■ that an end portion of the inlet pipe (10) protrudes from an upstream side (24) of the filter housing (12) into the first filter space part (26), and wherein the end portion of the inlet pipe (10) is disposed upstream of the filter element (16);
■ a debris collection area (22) upstream of the point where the inlet pipe (10) discharges into the first filter space part (26); and
wherein the arrangement of the turbocharger (T), the feed pipe (30), the discharge pipe (31), the filtration device (8) and the pumping device (32) is such that, in use, when the pumping device (32) is driven, a fluid flow is present in the filtration device (8) that flows from the inlet pipe (10) adjacent the upstream side (24) of the filtration device (8) to the outlet pipe (14) adjacent a downstream side of the filtration device (8) and when the pumping device (32) is shut down a backflow of fluid is present in the filtration device (8) that flows from the outlet pipe (14) to the inlet pipe (10), thereby backflushing the filter element (16) so that debris is dislodged from the filter element (16) and settles on the upstream side (24) in the debris collection area (22) adjacent the upstream side (24) of the filtration device (8), wherein the lubrication system downstream of the filtration device (8) encompasses a fluid volume that flows back through the filtration device (8) when the pumping device (32) is shut down that is so large that substantially all debris is dislodged from the filter element (16).

2. The lubrication system according to claim 1, including a fluid storage chamber (33) positioned at a level upstream of the level of the filtration device (8), the fluid feed pipe (30) having an inlet that is in fluid communication with the fluid storage chamber (33), wherein the configuration of the fluid feed pipe (30) and the fluid discharge pipe (31) is such that the backflow of fluid in the filtration device (8) occurs due to gravity.

3. The lubrication system according to any of the preceding claims, wherein the filter element (16) is a gauze filter.

4. The lubrication system according to any of the preceding claims, wherein the end portion of the inlet pipe (10) is provided with a baffle (18).

5. The lubrication system according to any of the preceding claims, wherein the upstream side (24) of the filter housing (12) is provided with one or more protrusions (29) that protrude into the first filter space part (26).

6. The lubrication system according to any of the preceding claims, wherein the upstream side (24) of the filter housing is provided with one or more magnets (29') or is magnetized itself.

7. The lubrication system according to any of the preceding claims, wherein the upstream side (24) of the filter housing is magnetized.

8. The lubrication system according to any of the preceding claims, wherein the ratio between a cross sectional area of a discharge opening (10') in the end portion of the inlet pipe (10) and the area of the upstream side (24) surrounding the protruding end portion of the inlet pipe (10) is smaller than 1/4.

9. The lubrication system according to any of the preceding claims, wherein a length of the end portion of the inlet pipe (10) that protrudes from the upstream side (24) of the filter housing is at least D, wherein D is the diameter of the inlet pipe (10).

10. A method for filtering lubrication oil for a bearing (48) of a turbocharger (T) of an internal combustion engine, the method being **characterized by**:
- providing a lubrication system according to any of the claims 1-9;
- feeding a lubrication oil flow to be filtered to the filtration device (8), such that the lubrication oil passes through the filter element (16);
- halting the lubrication oil flow;
- providing a backflow of lubrication oil through the filtration device (8) for dislodging debris from the filter element (16);
- allowing the debris to settle in a debris collection area (22) adjacent the upstream side (24) of the filtration device (8) before resuming feeding the lubrication oil flow to be filtered to the filtration device (8).

11. Use of a filtration device (8) in a lubrication oil system of an internal combustion engine, the lubrication oil system including:
- a turbocharger (T) having at least one bearing (48);
- a fluid discharge pipe (31) having an outlet that is in fluid connection with the at least one bearing (48) of the turbocharger (T);
- a the fluid feed pipe (30) having an inlet that is in fluid connection to the lubrication system of the engine for feeding lubrication oil to the at least one bearing (48) of the turbocharger (T);
- a pumping device (8);
the filtration device (8) comprising:
• a filter housing (12) defining a filter space (26,28);
• a filter element (16) dividing the filter space (26,28) into a first (26) and a second (28) filter space part;
• an inlet pipe (10) connected to the filter housing (12) and discharging into the first filter space part (26) and connected to the fluid feed pipe (30);
• an outlet pipe (14) connected to the filter housing (12) and emanating from the second filter space part (28) and connected to fluid discharge pipe (31),
**characterized in that**
the filtration device further includes:
• that an end portion of the inlet pipe (10) protrudes from an upstream side (24) of the filter housing (12) into the first filter space part (26), and wherein the end portion of the inlet pipe (10) is disposed upstream of the filter element (16);
• a debris collection area (22) upstream of the point where the inlet pipe (10) discharges into the first filter space part (26); and
and **in that** the use includes:
- driving the pumping device (32) to provide a fluid flow in the filtration device (8) that flows from the inlet pipe (10) adjacent the upstream side (24) of the filtration device (8) to the outlet pipe (14) adjacent a downstream side of the filtration device (8); and
- shutting down the pumping device (32) to provide a backflow of fluid in the filtration device (8) that flows from the outlet pipe (14) to the inlet pipe (10), thereby backflushing the filter element (16) so that debris is dislodged from the filter element (16) and settles on the upstream side (24) in the debris collection area (22) adjacent the upstream side (24) of the filtration device (8).

## Patentansprüche

1. Schmiersystem eines Verbrennungsmotors, umfassend:
- einen Turbolader (T) mit mindestens einem Lager (48);
- ein Fluidabflussrohr (31) mit einem Auslass, der in Fluidverbindung mit dem mindestens einen Lager (48) des Turboladers (T) steht;
- ein Fluidzuflussrohr (30) mit einem Einlass, der in Fluidverbindung mit dem Schmiersystem des Motors steht, um dem mindestens einen Lager (48) des Turboladers (T) Schmieröl zuzuführen;
- eine Pumpvorrichtung (32);
- eine Filtriervorrichtung (8), umfassend:
• ein Filtergehäuse (12), das einen Filterraum (26,28) definiert;
• ein Filterelement (16), das den Filterraum (26,28) in ein erstes (26) und ein zweites (28) Filterraumteil trennt;
• ein Einlassrohr (10), das mit dem Filtergehäuse (12) verbunden ist und in das ersten Filterraumteil (26) ableitet und mit dem Fluidzuflussrohr (30) verbunden ist;
• ein Auslassrohr (14), das mit dem Filtergehäuse (12) verbunden ist und vom zweiten Filterraumteil (28) ausgeht und mit dem Fluidabflussrohr (31) verbunden ist;
**dadurch gekennzeichnet, dass**
die Filtriervorrichtung ferner umfasst:
• dass ein Endabschnitt des Einlassrohrs (10) von einer stromaufwärts liegenden Seite (24) des Filtergehäuses (12) in das erste Filterraumteil (26) ragt und wobei der Endabschnitt des Einlassrohrs (10) stromaufwärts von dem Filterelement (16) angeordnet ist;
• einen Schmutzpartikelsammelbereich (22) stromaufwärts von der Stelle, wo das Einlassrohr (10) in das erste Filterraumteil (26) ableitet; und
wobei die Anordnung des Turboladers (T), des Zuflussrohrs (30), des Abflussrohrs (31), der Filtriervorrichtung (8) und der Pumpvorrichtung (32) so ist, dass bei Verwendung, wenn die Pumpvorrichtung (32) angetrieben wird, in der Filtriervorrichtung (8) ein Fluidfluss vorhanden ist, der vom Einlassrohr (10) neben der stromaufwärts gelegenen Seite (24) der Filtriervorrichtung (8) zum Auslassrohr (14) neben einer stromabwärts gelegenen Seite der Filtriervorrichtung (8) fließt, und wenn die Pumpvorrichtung (32) abgeschaltet ist, in der Filtriervorrichtung (8) ein Fluidrückfluss vorhanden ist, der vom Auslassrohr (14) zum Einlassrohr (10) fließt und dabei das Filterelement (16) rückspült, sodass Schmutzpartikel aus dem Filterelement (16) entfernt werden und sich auf der stromaufwärts gelegenen Seite (24) im Schmutzpartikelsammelbereich (22) neben der stromaufwärtsgelegenen Seite (24) der Filtriervorrichtung (8) ablagern, wobei das Schmiersystem stromabwärts von der Filtriervorrichtung (8) ein Fluidvolumen umfasst, das durch die Filtriervorrichtung (8) zurückfließt, wenn die Pumpvorrichtung (32) abgeschaltet wird, das so groß ist, dass im Wesentlichen die Schmutzpartikel vollständig aus dem Filterelement (16) entfernt werden.

2. Schmiersystem nach Anspruch 1, umfassend eine Fluidspeicherkammer (33), angeordnet auf einem Niveau stromaufwärts von der Filtriervorrichtung (8), wobei das Fluidzuflussrohr (30) einen Einlass aufweist, der in Fluidkommunikation mit der Fluidspeicherkammer (33) steht, wobei die Konfiguration des Fluidzuflussrohrs (30) und des Fluidabflussrohrs (31) so ist, dass der Fluidrückfluss in der Filtriervorrichtung (8) durch Schwerkraft erfolgt.

3. Schmiersystem nach einem der vorhergehenden Ansprüche, wobei das Filterelement (16) ein Gazefilter ist.

4. Schmiersystem nach einem der vorhergehenden Ansprüche, wobei der Endabschnitt des Einlassrohrs (10) mit einer Ablenkplatte (18) versehen ist.

5. Schmiersystem nach einem der vorhergehenden Ansprüche, wobei die stromaufwärts liegende Seite (24) des Filtergehäuses (12) mit einem oder mehreren Vorsprüngen (29) versehen ist, die in das erste Filterraumteil (26) ragen.

6. Schmiersystem nach einem der vorhergehenden Ansprüche, wobei die stromaufwärts liegende Seite (24) des Filtergehäuses mit einem oder mehr Magneten (29') versehen ist oder selbst magnetisiert ist.

7. Schmiersystem nach einem der vorhergehenden Ansprüche, wobei die stromaufwärts liegende Seite (24) des Filtergehäuses magnetisiert ist.

8. Schmiersystem nach einem der vorhergehenden Ansprüche, wobei das Verhältnis zwischen einem Querschnittbereich einer Auslassöffnung (10') im Endabschnitt des Einlassrohrs (10 und der Bereich der stromaufwärts liegenden Seite (24), der den vorspringenden Endabschnitt des Einlassrohrs (10) umgibt, kleiner als 1/4 ist.

9. Schmiersystem nach einem der vorhergehenden Ansprüche, wobei eine Länge des Endabschnitts des Einlassrohrs (10), der aus der stromaufwärts liegenden Seite (24) des Filtergehäuses ragt, mindestens D ist, wobei D der Durchmesser des Einlassrohrs (10) ist.

10. Verfahren zum Filtern von Schmieröl für ein Lager (48) eines Turboladers (T) eines Verbrennungsmotors, wobei das Verfahren **gekennzeichnet ist durch**:
- Bereitstellen eines Schmiersystems nach einem der Ansprüche 1-9;
- Zuführen eines zu filternden Schmierölflusses zu der Filtriervorrichtung (8), so dass das Schmieröl das Filterelement (16) passiert;
- Anhalten des Schmierölflusses;
- Bereitstellen eines Rückflusses von Schmieröl **durch** die Filtriervorrichtung (8), um Schmutzpartikel aus dem Filterelement (16) zu entfernen;
- Absetzenlassen der Schmutzpartikel in einem Schmutzpartikelsammelbereich (22) neben der stromaufwärts liegenden Seite (24) der Filtriervorrichtung (8) vor dem Wiederaufnehmen der Zuführung des zu filternden Schmierölflusses zu der Filtriervorrichtung (8).

11. Verwendung der Filtriervorrichtung (8) in einem Schmierölsystem eines Verbrennungsmotors, wobei das Schmierölsystem Folgendes umfasst:
- einen Turbolader (T) mit mindestens einem Lager (48);
- ein Fluidabflussrohr (31) mit einem Auslass, der in Fluidverbindung mit dem mindestens einen Lager (48) des Turboladers (T) steht;
- ein Fluidzuflussrohr (30) mit einem Einlass, der in Fluidverbindung mit dem Schmiersystem des Motors steht, um dem mindestens einen Lager (48) des Turboladers (T) Schmieröl zuzuführen;
- eine Pumpvorrichtung (32);
wobei die Filtriervorrichtung (8) umfasst:
• ein Filtergehäuse (12, das einen Filterraum (26,28) definiert;
• ein Filterelement (16), das den Filterraum (26,28) in ein erstes (26) und ein zweites (28) Filterraumteil trennt;
• ein Einlassrohr (10), das mit dem Filtergehäuse (12) verbunden ist und in das ersten Filterraumteil (26) ableitet und mit dem Fluidzuflussrohr (30) verbunden ist;
• ein Auslassrohr (14), das mit dem Filtergehäuse (12) verbunden ist und vom zweiten Filterraumteil (28) ausgeht und mit dem Fluidabflussrohr (31) verbunden ist;
**dadurch gekennzeichnet, dass**
die Filtriervorrichtung ferner umfasst:
• dass ein Endabschnitt des Einlassrohrs (10) von einer stromaufwärts liegenden Seite (24) des Filtergehäuses (12) in das erste Filterraumteil (26) ragt und wobei der Endabschnitt des Einlassrohrs (10) stromaufwärts von dem Filterelement (16) angeordnet ist;
• einen Schmutzpartikelsammelbereich (22) stromaufwärts von der Stelle, wo das Einlassrohr (10) in das erste Filterraumteil (26) ableitet; wobei
die Verwendung Folgendes umfasst:
- Antreiben der Pumpvorrichtung (32) zum Bereitstellen eines Fluidflusses in der Filtriervorrichtung (8), der vom Einlassrohr (10) neben der stromaufwärts liegenden Seite (24) der Filtriervorrichtung (8) zum Auslassrohr (14) neben einer stromabwärts liegenden Seite der Filtriervorrichtung (8) fließt; und
- Abschalten der Pumpvorrichtung (32), um einen Rückflusses des Fluids in die Filtriervorrichtung (8) bereitzustellen, der vom Auslassrohr (14) zum Einlassrohr (10) fließt, wodurch das Filterelement (16) rückgespült wird, sodass Schmutzpartikel aus dem Filterelement (16) entfernt werden und sich auf der stromaufwärts liegenden Seite (24) im Schmutzpartikelsammelbereich (22) neben der stromaufwärts liegenden Seite (24) der Filtriervorrichtung (8) absetzen.

## Revendications

1. Système de lubrification d'un moteur à combustion interne, comprenant :
- un turbocompresseur (T) possédant au moins un palier (48) ;
- une tubulure de décharge de fluide (31) possédant une sortie qui est reliée fluidiquement audit au moins un palier (48) du turbocompresseur (T) ;
- une tubulure d'admission de fluide (30) possédant une entrée qui est reliée fluidiquement au système de lubrification du moteur afin d'amener de l'huile lubrifiante audit au moins un palier (48) du turbocompresseur (T) ;
- un dispositif de pompage (32),
- un dispositif de filtration (8) qui comprend :
• un boîtier de filtre (12) définissant un espace de filtration (26, 28) ;
• un élément filtrant (16) divisant l'espace de filtration (26, 28) en une première partie (26) et une deuxième partie (28) d'espace de filtration ;
• un tuyau d'admission (10) relié au boîtier de filtre (12), débouchant dans la première partie d'espace de filtration (26) et relié à la tubulure d'admission de fluide (30) ;
• un tuyau de sortie (14) relié au boîtier de filtre (12), sortant de la deuxième partie d'espace de filtration (28) et relié à la tubulure de décharge de fluide (31),
**caractérisé en ce que**
le dispositif de filtration comprend en outre :
• une partie d'extrémité du tuyau d'admission (10) qui dépasse d'un côté amont (24) du boîtier de filtre (12) dans la première partie d'espace de filtration (26), la partie d'extrémité du tuyau d'admission (10) étant disposée en amont de l'élément filtrant (16) ;
• une zone de collecte de débris (22) en amont du point où le tuyau d'admission (10) débouche dans la première partie d'espace de filtration (26) ; et
dans lequel l'agencement comprenant le turbocompresseur (T), le tuyau d'admission (10), la tubulure de décharge (31), le dispositif de filtration (8) et le dispositif de pompage (32) est tel que, à l'utilisation, lorsque le dispositif de pompage (32) est en marche, un écoulement de fluide allant du tuyau d'admission (10) adjacent au côté amont (24) du dispositif de filtration (8) au tuyau de sortie (14) adjacent à un côté aval du dispositif de filtration (8) est présent dans le dispositif de filtration (8) et, lorsque le dispositif de pompage (32) est arrêté, un écoulement de fluide rétrograde allant du tuyau de sortie (14) au tuyau d'admission (10) est présent dans le dispositif de filtration (8), réalisant ainsi un rétrobalayage de l'élément filtrant (16) tel que les débris sont délogés de l'élément filtrant (16) et se déposent sur le côté amont (24) dans la zone de collecte de débris (22) adjacente au côté amont (24) du dispositif de filtration (8), le système de lubrification en aval du dispositif de filtration (8) contenant un volume de fluide qui s'écoule en retour à travers le dispositif de filtration (8) lorsque le dispositif de pompage (32) est arrêté et qui est si grand que les débris sont délogés pratiquement en totalité de l'élément filtrant (16).

2. Système de lubrification selon la revendication 1, comprenant une chambre de stockage de fluide (33) positionnée à un niveau en amont du niveau du dispositif de filtration (8), la tubulure d'admission de fluide (30) possédant une entrée qui est en communication fluidique avec la chambre de stockage de fluide (33), dans lequel la tubulure d'admission de fluide (30) et la tubulure de décharge de fluide (31) ont une configuration telle que l'écoulement de fluide rétrograde dans le dispositif de filtration (8) se produit par gravité.

3. Système de lubrification selon l'une quelconque des revendications précédentes, dans lequel l'élément filtrant (16) est un filtre à tamis.

4. Système de lubrification selon l'une quelconque des revendications précédentes, dans lequel la partie d'extrémité du tuyau d'admission (10) est munie d'un déflecteur (18).

5. Système de lubrification selon l'une quelconque des revendications précédentes, dans lequel le côté amont (24) du boîtier de filtre (12) est muni d'une ou plusieurs saillies (29) qui dépassent dans la première partie d'espace de filtration (26).

6. Système de lubrification selon l'une quelconque des revendications précédentes, dans lequel le côté amont (24) du boîtier de filtre est muni d'un ou plusieurs aimants (29') ou est lui-même aimanté.

7. Système de lubrification selon l'une quelconque des revendications précédentes, dans lequel le côté amont (24) du boîtier de filtre est aimanté.

8. Système de lubrification selon l'une quelconque des revendications précédentes, dans lequel le ratio de l'aire de section d'un orifice de décharge (10') dans la partie d'extrémité du tuyau d'admission (10) sur l'aire de surface du côté amont (24) entourant la partie d'extrémité dépassante du tuyau d'admission (10) est inférieur à 1/4.

9. Système de lubrification selon l'une quelconque des revendications précédentes, dans lequel la longueur de la partie d'extrémité du tuyau d'admission (10) qui dépasse du côté amont (24) du boîtier de filtre est au moins égale à D, où D est le diamètre du tuyau d'admission (10).

10. Procédé de filtration de l'huile lubrifiante destinée à un palier (48) d'un turbocompresseur (T) d'un moteur à combustion interne, ledit procédé étant **caractérisé par** :
- la prédisposition d'un système de lubrification selon l'une quelconque des revendications 1 à 9 ;
- l'introduction d'un flux d'huile lubrifiante à filtrer dans le dispositif de filtration (8) de telle façon que l'huile lubrifiante traverse l'élément filtrant (16) ;
- l'arrêt du flux d'huile lubrifiante ;
- l'établissement d'un écoulement rétrograde de l'huile lubrifiante à travers le dispositif de filtration (8) afin de déloger les débris de l'élément filtrant (16) ;
- le dépôt des débris dans une zone de collecte de débris (22) adjacente au côté amont (24) du dispositif de filtration (8) avant de recommencer à introduire le flux d'huile lubrifiante à filtrer dans le dispositif de filtration (8).

11. Utilisation d'un dispositif de filtration (8) dans un système d'alimentation en huile lubrifiante d'un moteur à combustion interne, le système d'alimentation en huile lubrifiante comprenant :
- un turbocompresseur (T) possédant au moins un palier (48) ;
- une tubulure de décharge de fluide (31) possédant une sortie qui est reliée fluidiquement audit au moins un palier (48) du turbocompresseur (T) ;
- une tubulure d'admission de fluide (30) possédant une entrée qui est reliée fluidiquement au système de lubrification du moteur afin d'amener de l'huile lubrifiante audit au moins un palier (48) du turbocompresseur (T) ;
- un dispositif de pompage (8) ;
le dispositif de filtration (8) comprenant :
• un boîtier de filtre (12) définissant un espace de filtration (26, 28) ;
• un élément filtrant (16) divisant l'espace de filtration (26, 28) en une première partie (26) et une deuxième partie (28) d'espace de filtration ;
• un tuyau d'admission (10) relié au boîtier de filtre (12), débouchant dans la première partie d'espace de filtration (26) et relié à la tubulure d'admission de fluide (30) ;
• un tuyau de sortie (14) relié au boîtier de filtre (12), sortant de la deuxième partie d'espace de filtration (28) et relié à la tubulure de décharge de fluide (31),
**caractérisée en ce que**
le dispositif de filtration comprend en outre :
• une partie d'extrémité du tuyau d'admission (10) qui dépasse d'un côté amont (24) du boîtier de filtre (12) dans la première partie d'espace de filtration (26), la partie d'extrémité du tuyau d'admission (10) étant disposée en amont de l'élément filtrant (16) ;
• une zone de collecte de débris (22) en amont du point où le tuyau d'admission (10) débouche dans la première partie d'espace de filtration (26) ; et
et **en ce que** ladite utilisation comprend :
- la mise en marche du dispositif de pompage (32) afin d'établir dans le dispositif de filtration (8) un écoulement de fluide allant du tuyau d'admission (10) adjacent au côté amont (24) du dispositif de filtration (8) au tuyau de sortie (14) adjacent à un côté aval du dispositif de filtration (8) ; et
- l'arrêt du dispositif de pompage (32) afin d'établir dans le dispositif de filtration (8) un écoulement de fluide rétrograde allant du tuyau de sortie (14) au tuyau d'admission (10), réalisant ainsi un rétrobalayage de l'élément filtrant (16) tel que les débris sont délogés de l'élément filtrant (16) et se déposent sur le côté amont (24) dans la zone de collecte de débris (22) adjacente au côté amont (24) du dispositif de filtration (8).
